# EUROPEAN PATENT APPLICATION

(11) **EP 2 533 575 A1**
(43) Date of publication of application: **12.12.2012**
(21) Application number: 12169475.6
(22) Date of filing: 25.05.2012
(51) Int. Cl.: H04W 48/04, H04M 1/725

(54) **Systems and Methods using Intrabody Transmission for Controlling Personal Communications**

(30) Priority: 08.06.2011 US 201113155442
(71) Applicant: Delphi Technologies, Inc., Troy, MI 48007 (US)
(72) Inventor: Oman, Todd P., Greentown, IN Indiana 46936 (US); Sultan, Michel F., Troy, MI Michigan 48098 (US)
(74) Representative: Denton, Michael John

(57) **Abstract**

A system (10) and method (200) for controlling personal communications. The system (10) includes a transmitter (14) configured to emit a transmitted signal (16) suitable for intrabody transmission, and a receiver (30) configured to determine if a received signal exhibits a characteristic that corresponds to a received signal that would arise from the transmitted signal (16) being coupled to the receiver (30) via intrabody transmission. The system (10) also includes a controller (34) configured to control personal communications such as text messaging based on the received signal characteristic. In one example, the system (10) uses intrabody transmission or intrabody communication to determine if an operator (22) of a vehicle (12) is touching or trying to use a personal communication device (32) while driving the vehicle (12).

## Description

### TECHNICAL FIELD

This disclosure generally relates to controlling personal communications, and more particularly relates to using intrabody transmission techniques to determine if a vehicle operator is touching a personal communication device.

### BACKGROUND OF INVENTION

Several ways to reduce vehicle operator distraction caused by personal communication devices (PCD) such as cell phones, feature phones, smart phones, tablets, net books, and personal computers have been suggested. Much of the focus has been on how to prevent driver distraction caused by text messaging when traveling in a vehicle. However, suggestions such as disabling text messaging if the PCD is moving at a speed greater than walking speed, broadcasting a jamming signal within the vehicle, and disabling text messing when the PCD is at certain locations like on a roadway may inadvertently block text messaging by a passenger in the vehicle whose text messaging activity does not necessarily distract the operator.

### SUMMARY OF THE INVENTION

In accordance with one embodiment, a system for controlling personal communications is provided. The system includes a transmitter, a receiver, and a controller. The transmitter is configured to emit a transmitted signal suitable for intrabody transmission. The receiver is configured to determine a received signal characteristic indicative of a received signal arising from the transmitted signal being coupled to the receiver via intrabody transmission. The controller is configured to control personal communications based on the received signal characteristic.

In another embodiment, a personal communications device equipped to cooperate with a system for controlling personal communications is provided. The system includes a transmitter configured to emit a transmitted signal suitable for intrabody transmission. The personal communications device includes a receiver and a controller. The receiver is configured to determine a received signal characteristic indicative of a received signal arising from the transmitted signal being coupled to the receiver by intrabody transmission. The controller is configured to control personal communications based on the received signal characteristic.

In another embodiment, a transmitter is provided. The transmitter is configured to emit a transmitted signal suitable for intrabody transmission. The transmitter is also configured to be installed in a vehicle in a manner suitable to couple the transmitted signal to an operator of the vehicle.

In yet another embodiment, a receiver is provided. The receiver is configured to detect a transmitted signal coupled via intrabody transmission and is configured to be installed in a vehicle.

In yet another embodiment, a method for controlling personal communications is provided. The method includes the step of emitting a transmitted signal suitable for intrabody transmission. The method also includes the step of determining a signal characteristic of a received signal arising from the transmitted signal. The method also includes the step of controlling personal communications based on the signal characteristic.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is cut away view of a vehicle equipped with a system for controlling personal communications in accordance with one embodiment; and

Fig. 2 is a flowchart of a method for operating the system of Fig. 1 in accordance with one embodiment.

### DESCRIPTION OF THE PREFERRED EMBODIMENT

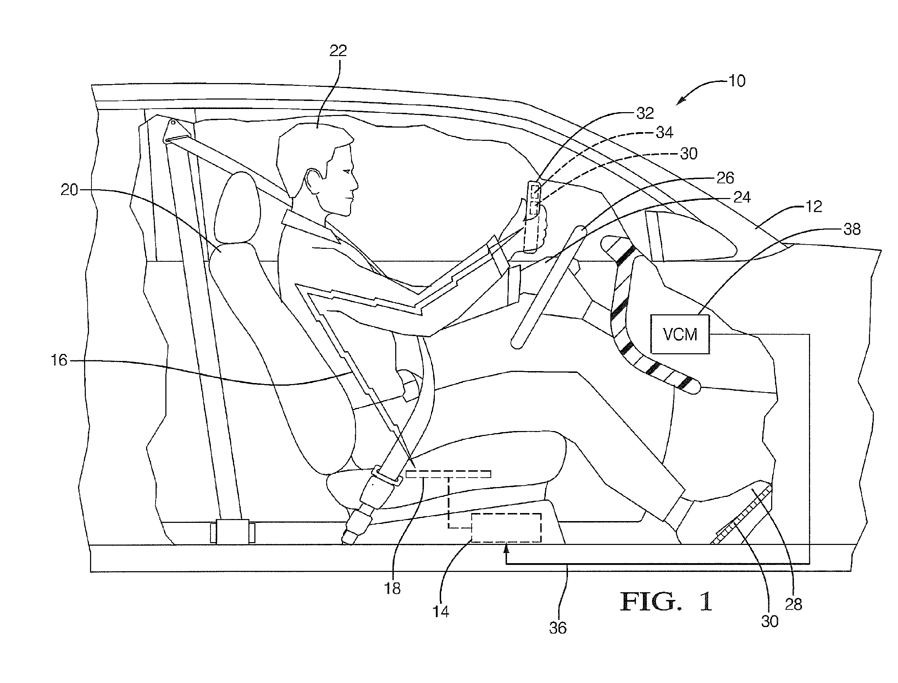

Fig. 1 illustrates a non-limiting example of a system 10 for controlling personal communications. As used herein, controlling personal communications means controlling or determining what form of information is received or sent by a person. In relation to one embodiment where information is communicated to a person via a personal communication device (PCD), controlling personal communications may include, but is not limited to, blocking reception and/or display of text messages and/or image based messages, rerouting a text message to an alternate display, converting a text message into a voice message, rerouting a phone call to a voice message system, disabling features on the PCD to prevent entering a text message or prevent entering a web information request. The basis for determining which PCD features are disabled or altered may in part be based on a determination that the PCD is in a vehicle, a determination that the PCD is being touched by a vehicle operator, and/or a determination that the vehicle is operating, for example, not in park.

In one embodiment, the determination that the PCD is in a vehicle and is being touched by a vehicle operator may be by way of intrabody transmission. In general, intrabody transmission may be described as using the body of a person to capacitive couple a transmitter and a receiver, and so is advantageous over other systems that are unable to discriminate between drivers and passengers as described in relation to the existing artwork identified above. Transmitting signals via coupling through the human body has been studied, see Signal Transmission by Galvanic Coupling Through the Human Body: IEEE Transactions on Instrumentation and Measurement April 2010 Volume 59 Issue 4, Integrated Syst. Lab. (IIS), ETH Zurich, Zurich, Switzerland; and The Human Body Characteristics as a Signal Transmission Medium for Intrabody Communication: IEEE Transactions on Microwave Theory And Techniques (2007) Volume: 55, Issue: 5, Pages: 1080-1086).

Continuing to refer to Fig. 1, the system 10 may include a transmitter 14 configured to emit a transmitted signal 16 suitable for intrabody transmission. The transmitter 14 may be fabricated using commercially available discrete electrical components such as transistors, or may include integrated circuits (ICs), as will be recognized by those in the art. In this non-limiting example, the transmitter 14 is illustrated as being coupled to an antenna or electrode 18 located within a seat assembly 20 of the vehicle 12. The electrode 18 may be formed of electrically conductive wire, foil, or other electrically conductive material suitable to form an electrode for broadcasting or emitting the transmitted signal 16. In general, the transmitter 14/electrode 18 is installed in the vehicle 12 in a manner suitable to couple the transmitted signal 16 to an operator 22 of the vehicle. Alternatively, the transmitter 14 and or electrode 18 may be located so the transmitted signal 16 is coupled into a hand 24 of the operator 22 through a steering wheel 26, or into a foot 28 of the operator through a floor 30 of the vehicle.

The system 10 may also include a receiver 30 configured to detect the transmitted signal 16, illustrated in this non-limiting example as being installed in a personal communication device 32, hereafter often PCD 32. The receiver 30 may be fabricated using commercially available discrete electrical components such as transistors, or may include integrated circuits (ICs), as will be recognized by those in the art. The receiver 30 may be configured to determine a received signal characteristic that characterizes a received signal arising from the transmitted signal 16 as being coupled to the receiver 30 via intrabody transmission. By way of example, and not limitation, the received signal characteristic may be signal strength of the received signal, and an indication that the transmitted signal 16 traveled to the receiver 30 by intrabody transmission may be based on the signal strength being greater than a threshold. By way of further example, the PCD 32 may have conductive regions on the surface of the PCD 32, for example a decorative chrome trim piece that also serves as an antenna for detecting contact with the PCD 32 by a person.

The system may also include a controller 34 configured to control personal communications based on the received signal characteristic. In this non-limiting example, the controller 34 is illustrated as being installed in the PCD 32. Alternative locations for the controller 34 will become apparent following the descriptions below of alternative arrangements of the transmitter 14, receiver 30, and controller 34. The controller 34 may include a processor such as a microprocessor or other control circuitry as should be evident to those in the art. The controller 34 may include memory, including non-volatile memory, such as electrically erasable programmable read-only memory (EEPROM) for storing one or more routines, thresholds and captured data. The one or more routines may be executed by the processor to perform steps for controlling personal communications via the PCD 32 as described herein.

Fig. 1 illustrates that the system 10 is used in an automobile. Alternatively, the system 10 may be used in other vehicles such as off-road construction equipment, aircraft, watercraft, and trains in order to control personal communications available to a person operating these vehicles. Also, the system 10 may be used to control personal communications available to persons operating stationary equipment such as metal forming machines, chemical processing machines, or remotely controlled vehicles. By way of example and not limitation, the electrode 18 may be located in a floor mat where an operator may stand to operate the alternative vehicles or stationary equipment, or the electrode 18 may be coupled to control input devices such as levers, knobs, or pushbuttons that an operator may contact when operating the alternative vehicles or stationary equipment.

The transmitted signal 16 may be characterized as having a transmitted signal characteristic, for example a frequency, amplitude, or modulation format. By way of example and not limitation, the transmitter 14 may be activated to output the transmitted signal 16 when the operator 22 is detected as residing on the seat assembly 20. Several ways to detect an occupant in a vehicle seat are known. Some occupant detection systems detect the presence of an occupant by detecting weight on the seat assembly 20. Other occupant detection systems determine an electrical impedance of an electrode such as the electrode 18.

It would be advantageous for the system 10 to be paired with such an occupant detection system as the transmitter 14 may also be configured to determine the presence of the operator 22. If the operator 22 is determined to be residing in the seat assembly 20, then the transmitter 14 may output a transmitted signal 16 having a particular frequency that the receiver 30 is configured to detect. Alternatively, if it is desired that the operator 22 be able to operate all the features of the PCD 32 when the vehicle transmission is in park, the transmitter 14 may be configured to receive a vehicle operation signal 36 from a vehicle control module (VCM) in order to control personal communications based on the vehicle operation signal 36. The vehicle operation signal 36 may indicate one or more modes of vehicle operation such as engine running or not running, vehicle transmission in park or neutral, if the vehicle brake is applied, vehicle speed greater than or less than some threshold speed.

By way of an example and not limitation, if the VCM indicates that the vehicle engine is moving, the transmitter 14 may output a transmitted signal 16 having sufficient amplitude for the receiver 30 to detect the transmitted signal 16 if it is coupled to the receiver 30 through the operator 22 touching the PCD 32, and the controller 34 may inhibit the PCD from accepting any text messages input by the operator 22. In another embodiment, the system 10 may be configured so the PCD 32 blocks an incoming text message if the received signal characteristic detected by the receiver 30 is indicative of the operator 22 contacting the PCD 32, unless the incoming text message is characterized as urgent. The message may be indicated as urgent by the sender of the message, or the PCD may be configured to automatically respond to any incoming message when the vehicle 12 is moving by asking the sender if the message is urgent. Furthermore, the PCD 32 may be configured to only notify the operator 22 that a message has been received if the message is from an authorized sender. Contacting the PCD 32 by the operator 22 may be by way of an operator hand actually touching the PCD, or that the PCD is in a pocket of clothing worn by the operator 22

In another embodiment of the system 10, an alternative to the embodiment shown in Fig. 1, the transmitter 14 may be installed in the PCD 32, and the receiver 30 installed in the vehicle 12 so the transmitted signal 16 travels from the PCD 32 to the electrode 18. Such a configuration may be advantageous if the VCM 38 is configured to communicate vehicle status to the PCD 32, for example by way of a Bluetooth® connection. In this configuration, the transmitted signal characteristic may be determined based on a personal communications device operation signal that indicates what form of communication the PCD is performing.

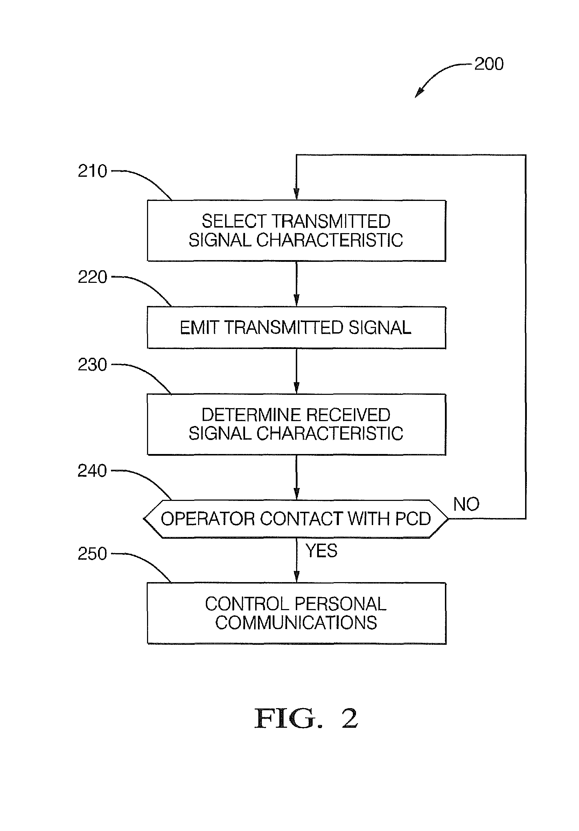

Fig. 2 illustrates a method 200 for controlling personal communications. One embodiment is particularly suited for controlling personal communications when a personal communication device (PCD) 32 is being used that has various personal communication modes or features that are deactivated where the person using the PCD 32 is an operator 22 of a vehicle or other machinery.

Step 210, SELECT TRANSMITTED SIGNAL CHARACTERISTIC, may include selecting a transmitted signal characteristic in order to indicate which modes of operation of the PCD 32 should be disabled, blocked, or otherwise altered from what would be characterized as normal operation. The modes selected may be based on a vehicle operation signal 36, such as a signal indicating that the vehicle 12 is traveling at some speed. Alternatively, if the transmitter 14 is installed in the PCD 32 as suggested above, the transmitted signal characteristic may be selected based on a personal communications device operation signal indicating which of the PCD modes of communication is being used or accessed.

Step 220, EMIT TRANSMITTED SIGNAL, may include emitting a transmitted signal by the transmitter 14 suitable for intrabody transmission, for example a radio frequency signal having a frequency from about 100 kHz to about 150 MHz. The exact frequency or signal may be selected to be indicative of a particular mode of vehicle 12 operation, or may be selected to indicate a particular mode of PCD 32 operation. The signal may be a steady carrier wave, or may be modulated or encoded with information to further indicate something regarding the operation of the system 10, for example how fast the vehicle is moving.

Step 230, DETERMINE RECEIVED SIGNAL CHARACTERISTIC, may include determining a signal characteristic of a received signal by the receiver 30, and determining if the signal characteristic corresponds to an expected characteristic that would likely arise from the transmitted signal 16.

Step 240, OPERATOR CONTACT WITH PCD?, may include determining if the received signal characteristic is indicative of the operator 22 contacting the PCD 32. If NO, then the method 200 may return to step 210 and continue to try and detect operator contact with the PCD 32. If YES, the method 200 may proceed to step 250.

Step 250, CONTROL PERSONAL COMMUNICATIONS, may include controlling personal communications based on the signal characteristic. By way of non-limiting example, controlling personal communications may include disabling personal communications that include text message entry into a PCD 32 if an operator 22 of a vehicle 12 is contacting the PCD 32 and the vehicle 12 is operating, for example moving. Alternatively, controlling personal communications may include rerouting the text message to an alternate communication device if an operator of a vehicle is contacting the personal communication device and the vehicle is operating. Alternate communication devices may include, but are not limited to, a display in the vehicle 12 that if viewed does not excessively distract the operator 22, or a text message to voice message converter so the operator 22 does not need to look away from the roadway to receive a message.

Accordingly, a system 10, a PCD 32 for the system 10, a transmitter 14 for the system, and a method 200 of operating the system 10 is provided. The system 10 uses intrabody transmission or intrabody communication to determine if an operator 22 of a vehicle 12 is touching or trying to use a personal communication device 32 while driving the vehicle 12. A transmitted signal 16 from a transmitter 14 is generally well coupled through the body of the operator 22 to a receiver 30 if the operator is in contact with the receiver 30. Such an arrangement avoids unnecessarily disabling or interfering with a PCD 32 traveling in the vehicle 12 that is not being touched by the operator 22, for example a PCD of a passenger in the vehicle 12.

## Claims

1. A system (10) for controlling personal communications, said system (10) comprising:
a transmitter (14) configured to emit a transmitted signal (16) suitable for intrabody transmission;
a receiver (30) configured to determine a received signal characteristic indicative of a received signal arising from the transmitted signal (16) being coupled to the receiver (30) via intrabody transmission; and
a controller (34) configured to control personal communications based on the received signal characteristic.

2. The system (10) in accordance with claim 1, wherein the transmitter (14) is installed in a vehicle (12) and is configured to couple the transmitted signal (16) to an operator (22) of the vehicle (12).

3. The system (10) in accordance with claim 2, wherein the transmitter (14) emits the transmitted signal (16) from a location proximate to any one of a steering wheel (26), an operator (22) seat assembly (20), and a vehicle (12) interior surface.

4. The system (10) in accordance with claim 2, wherein the transmitted signal (16) is characterized as having a transmitted signal characteristic that is selected based on a vehicle operation signal (36).

5. The system (10) in accordance with claim 2, wherein the receiver (30) is installed in a personal communications device (32) and the receiver (30) is configured to determine if the received signal characteristic is indicative of the operator (22) contacting the personal communications device (32).

6. The system (10) in accordance with claim 5, wherein the personal communication device (32) is configured to block an incoming text message if the received signal characteristic is indicative of the operator (22) contacting the personal communications device (32) unless the incoming text message is characterized as urgent.

7. The system (10) in accordance with claim 1, wherein the transmitter (14) is installed in a personal communications device (32) and is configured to couple the transmitted signal (16) to an operator (22) contacting the personal communications device (32).

8. The system (10) in accordance with claim 7, wherein the receiver (30) is installed in a vehicle (12) and is configured to detect a transmitted signal (16) passing through the operator (22) of the vehicle (12).

9. The system (10) in accordance with claim 7, wherein the transmitted signal (16) has a transmitted signal characteristic that is selected based on a personal communications device operation signal.

10. The system (10) in accordance with claim 1, wherein the controller (34) is further configured to control personal communications based on an operation status of the vehicle (12).

11. The system (10) in accordance with claim 10, wherein the controller (34) is further configured to disable personal communications that include text message entry into a personal communication device (32) if an operator (22) of a vehicle (12) is contacting the personal communication device (32) and the vehicle (12) is operating.

12. The system (10) in accordance with claim 1, wherein the transmitted signal (16) has a transmitted signal characteristic that is selected based on a vehicle (12) geographic location.

13. A personal communications device (32) equipped to cooperate with a system (10) for controlling personal communications, wherein said system is as claimed in any one of claims 1-12.

14. A method (200) for controlling personal communications, said method (200) comprising:
emitting (220) a transmitted signal (16) suitable for intrabody transmission;
determining (230) a signal characteristic of a received signal arising from the transmitted signal (16); and
controlling (250) personal communications based on the signal characteristic.

15. The method (200) in accordance with claim 14, wherein the method (200) further comprises:
selecting (210) a transmitted signal characteristic based on a vehicle operation signal (36) or based on a personal communications device operation signal.

16. The method (200) in accordance with claim 14, wherein the method (200) further comprises :
determining (240) if the received signal characteristic is indicative of the operator (22) contacting the personal communications device (32).

17. The method (200) in accordance with claim 14, wherein the method (200) further comprises :
disabling personal communications that include text message entry into a personal communication device (32) if an operator (22) of a vehicle (12) is contacting the personal communication device (32) and the vehicle (12) is operating.

18. The method (200) in accordance with claim 14, wherein the method (200) further comprises:
rerouting the text message to an alternate communication device if an operator (22) of a vehicle (12) is contacting the personal communication device (32) and the vehicle (12) is operating.
